Europäisches Patentamt

European Patent Office

Office européen des brevets

(19)

(11) Veröffentlichungsnummer : **0 121 926**
**B1**

(12)                    **EUROPÄISCHE PATENTSCHRIFT**

(45) Veröffentlichungstag der Patentschrift :
30.09.87

(51) Int. Cl.⁴ : **H 04 M   3/30**, H 04 Q   3/00

(21) Anmeldenummer : 84103957.1

(22) Anmeldetag : 09.04.84

(54) Schaltungsanordnung mit selbsttätiger Teilnehmeranschlussleitungsüberwachung.

(30) Priorität : 11.04.83 DE 3312935

(43) Veröffentlichungstag der Anmeldung :
17.10.84 Patentblatt 84/42

(45) Bekanntmachung des Hinweises auf die Patenterteilung : 30.09.87 Patentblatt 87/40

(84) Benannte Vertragsstaaten :
DE FR GB NL SE

(56) Entgegenhaltungen :
DE-A- 2 938 982
US-A- 3 121 775

(73) Patentinhaber : **Siemens Aktiengesellschaft Berlin
und München
Wittelsbacherplatz 2
D-8000 München 2 (DE)**

(72) Erfinder : **Lechner, Robert, Dipl.-Ing.
Haidfeldstrasse 5
D-8156 Otterfing (DE)**
Erfinder : **Dragotin, Alexander, Dipl.-Ing.
Edelweissstrasse 177
D-8039 Puchheim (DE)**

EP 0 121 926 B1

## Beschreibung

Die Erfindung betrifft eine Schaltungsanordnung mit selbsttätiger Teilnehmeranschlußleitungsüberwachung mittels einer anschaltbaren Leitungsstromkontroll- und Meßschaltung für an Fernsprechanlagen mit zumindest einer zentralen Steuerung anschaltbare digitale Endgeräten, wobei den Teilnehmerschaltungen dieser Endgeräte Indikationsstellen für die Überwachung von an Teilnehmeranschlußleitungen auftretenden Störeinflüssen zugeordnet sind.

Aus der DE-OS 32 30 250 ist bereits eine Teilnehmerschaltung für den Anschluß einer zweiadrigen Teilnehmerleitung an einer Fernmelde-, insbesondere Fernsprechanlage bekannt. Die bekannte Schaltungsanordnung vermag zwar den Speisestromkreis bei Überspannungszuständen zu unterbrechen, nicht aber sonstige Prüfungen durchzuführen.

Es ist ferner eine Schaltungsanordnung für eine eigenprüfbare Teilnehmeranschlußschaltung mit Erkennung des Schaltzustandes einer Teilnehmerleitung bekannt (DE-OS 29 38 982). Bei dieser Teilnehmeranschlußschaltung, die dem Anschluß von analogen Endgeräten dient, beschränkt sich die Eigenprüfung auf Überprüfung von Schaltkontakten, mit deren Hilfe zum Zwecke einer Umschaltung von hochohmiger Speisung auf niederohmige Speisung hochohmige im Speisekreis liegende Widerstände überbrückt werden können.

Der Erfindung liegt die Aufgabe zugrunde, eine Schaltungsanordnung der eingangs genannten Art dahingehend zu verbessern, daß neben einer Prüfung auf Überspannung auch weitere Prüfungen vorgenommen werden können.

Die Lösung dieser Aufgabe erfolgt erfindungsgemäß dadurch, daß mehreren über eine gemeinsame Baugruppe an eine Fernsprechanlage anschaltbaren Teilnehmerschaltungen jeweils den Indikationsstellen zugeordnete Leitungsstromkontrollschaltungen und eine gemeinsame, baugruppenindividuelle Leitungsstromkontrollschaltung zugeordnet sind, deren an den Indikationsstellen wirksame Potentiale einem Analog-/Digitalwandler zugeführt werden, der von einer der Baugruppe zugeordneten peripheren Steuerung gesteuert wird, und daß sowohl die periphere Steuerung zyklisch die der Baugruppe zugeordnete Teilnehmerschaltungen auf Störeinflüsse prüft, als auch durch die zentrale Steuerung in Abhängigkeit von zur Messung bestimmter Funktionen der Teilnehmeranschlußleitung abgegebenen Befehlen über die periphere Steuerung die Indikationstellen der Teilnehmerschaltungen der Baugruppe ansteuerbar sind.

Die Erfindung bietet den Vorteil, daß mittels einer einfachen schaltungstechnischen Realisierung verschiedene Prüfungen durchführbar sind.

Als vorteilhaft erweist sich dabei in weiterer Ausgestaltung der Erfindung, daß über die bloße Erkennung von Störeinflüssen hinaus durch geeignete Schaltmaßnahmen die Wirkung der Störeinflüsse eingegrenzt werden kann.

Gemäß einer weiteren Ausgestaltung der Erfindung ist es auch möglich, die die Messung bestimmter Funktionen an der Teilnehmerleitung auslösenden Befehle in externe, an die zentrale Steuerung anschaltbare Prüfendgeräte eingeben zu können und so unabhängig von etwaigen zeitlich vorbestimmten Routinebefehlen nach Bedarf Messungen vornehmen zu können.

Gemäß einer weiteren vorteilhaften Ausgestaltung ist es auch möglich, kritische Abweichungen des Leitungsstroms durch entsprechende Abtastungen bereits in Bruchteilen einer Periode zu erkennen und gegebenenfalls die Störeinflüsse eingrenzende Schaltmaßnahmen vorzunehmen.

Anhand der Zeichnungen wird nun die Erfindung in einem zum Verständnis erforderlichen Umfang beschrieben. Dabei zeigt

Figur 1   ein Ausführungsbeispiel einer erfindungsgemäßen Teilnehmeranschlußschaltung

Figur 2   zeigt eine mit einer Konstantstromquelle versehene Speiseschaltung einer erfindungsgemäßen Teilnehmeranschlußschaltung.

Für Vermittlungsstellen, die ein elektronisches Koppelfeld enthalten, ist als teilnehmerindividuelle Anordnung eine sogenannte Teilnehmeranschlußschaltung vorgesehen, durch die u. a. die Speisung der jeweils zugeordneten Endgeräte vorgenommen wird. Bestandteil dieser Teilnehmeranschlußschaltung sind demnach die beiden Speisewiderstände R1 und R2. Der Widerstand R1 ist in die an Erdpotential liegende Ader, die b-Ader der Teilnehmeranschlußleitung, und der Widerstand R2 in die an Speisepotential liegende Ader, die a-Ader der Teilnehmeranschlußleitung eingefügt. Das Speisepotential wird über die jeweiligen Teilnehmeranschlußschaltungen für alle Teilnehmerschaltungen einer Vermittlungsstelle von der zentralen Batterie — UB geliefert.

Die erfindungsgemäße Teilnehmeranschlußschaltung umfaßt eine Leitungsstromkontrollschaltung, die aus einer leitungsindividuellen Leitungsstromkontrollschaltung LSKS1 sowie aus mindestens einer baugruppenindividuellen Leitungsstromkontrollschaltung LSKS2 besteht. In jede der beiden Adern können neben den bereits genannten Speisewiderständen weitere Widerstände in Serie zum Speisekreis vorgesehen werden, die im Betriebszustand durch je ein Schaltelement überbrückt sind.

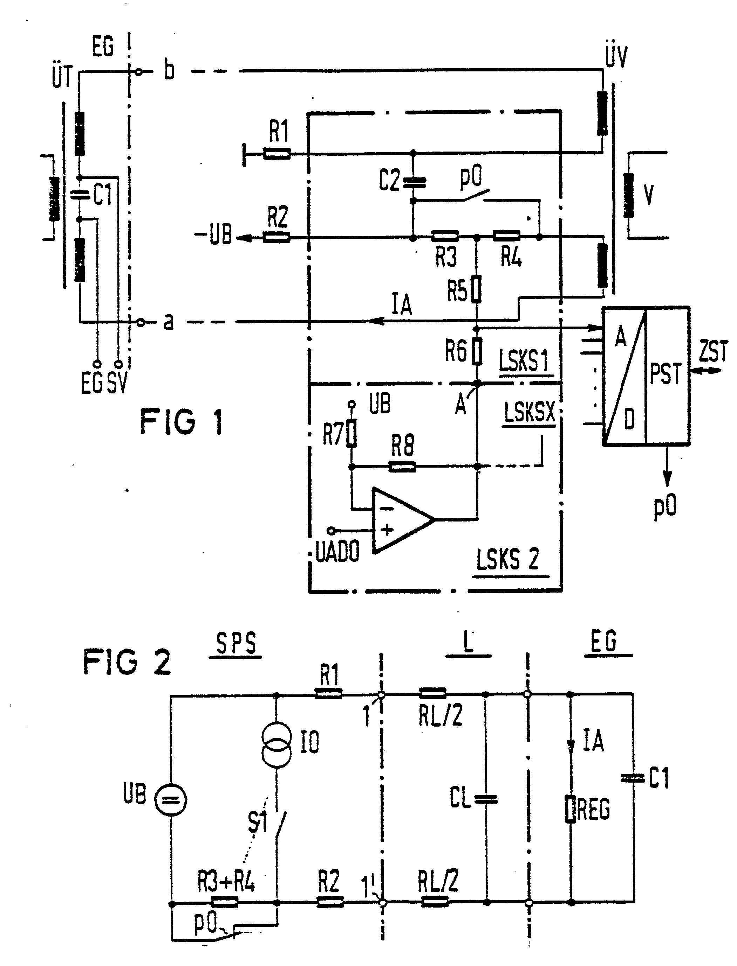

In Fig. 1 sind dies die zur a-Ader gehörenden Widerstände R3 und R4, sowie das Schaltelement pO. Mit Hilfe dieses Schaltelements pO kann in bestimmten Betriebszuständen entweder ein hochohmiger oder ein niederohmiger Gesamtwiderstand in die Leitungsadern eingeschaltet werden. Der Kondensator C2 überbrückt die beiden Leitungsadern an den der speisenden Quelle abgewandten Anschlüssen der beiden Speisewiderstände R1 und R2.

Das Ausführungsbeispiel zeigt einen Spannungsteiler R5 und R6. R6 liegt an seinem Fußpunkt A am Ausgang der zentralen Spannungsquelle der baugruppenindividuellen Leitungsstromkontrollschaltung LSKS2. Die teilnehmerindividuelle Leitungsstromkontrollschaltung LSKS1 wird durch die Widerstände R3, R4, R5, R6 und das Schaltelement pO gebildet. Die Verbindung zwischen R5 und R6 liegt an einem Multiplexeingang eines A/D-Wandlers, der von einer peripheren Steuerung PST bedient wird. Die Ausgangsspannung der Leitungsstromkontrollschaltung LSKS2 ist so bemessen, daß im Fall IA = O die Spannung am Eingang des A/D-Wandlers gleich der A/D-Wandler-Bezugsspannung UADO ist. Hierzu haben sich die Widerstände R7 und R8 so zu verhalten, wie sich die Summe der Widerstände R5 mit der Parallelschaltung der Widerstände R3 und R4 zum Widerstand R6 verhält.

$$R7/R8 = R5 + [(R3R4)/(R3 + R4)]/R6$$

An die Teilnehmeranschlußleitung ist ein Endgerät EG anschließbar. Durch die Übertrager ÜT und ÜV wird auf der Teilnehmer- bzw. auf der Vermittlungsseite der Speisekreis von Übertragungskreis entkoppelt. Der Kondensator C1 im Endgerät dient zur Entkopplung von Rückwirkungen der Endgerätestromversorgung EGSV auf den Übertragungskreis. Dieser Kondensator C1 ist prinzipiell in jedem Endgerät vorhanden.

Die Endgerätestromversorgung EGSV kann entweder die an den a-b-Adern angebotene Spannung oder aus einem zusätzlichen lokalen Netzteil zugeführte Spannung zur Erzeugung der im Endgerät benötigen Versorgungsspannung benutzen. Üblicherweise bezeichnet man den ersten Fall als Fernspeisung, den zweiten Fall als Lokalspeisung.

Die periphere Steuerung PST wird vorzugsweise durch einen Mikroprozessor realisiert, der von einer nicht näher dargestellten zentralen Steuerung ZST Befehle empfängt und nach deren Durchführung mit Meldungen an diese antwortet. Die periphere Steuerung PST dient auch zur Steuerung des Schaltelementes pO.

Mittels der erfindungsgemäßen Schaltungsanordnung wird der Leitungsstrom im Normalbetrieb überwacht, um im Kurzschlußfall die Speisung von der peripheren Steuerung PST über den Ausgang zum Schaltelement pO hochohmig zu schalten. Hierzu wird der A/D-Wandler von der peripheren Steuerung PST so gesteuert, daß er den Multiplexeingang jeder angeschlossenen Leitungsstromkontrollschaltung LSKS1 in äquidistanten Zeitintervallen digitalisiert, wobei die Periodendauer als ein ganzzahliger Bruchteil einer Periode mindestens eines störenden Längsstroms, hervorgerufen beispielsweise durch das Starkstrommnetz oder das Bahnnetz, ist. Diese digitalisierten Werte von der peripheren Steuerung PST über eine Periode von z. B. 60 ms aufsummiert und die Summe mit einem vorgegebenen zulässigen Maximalwert verglichen, wobei ein Überschreiten dieses zulässigen Maximalwertes zum Hochohmigschalten des Schaltelementes pO durch die periphere Steuerung PST führt. Durch die Summation und eine entsprechende Wahl der Abtastintervalle wird erreicht, daß stationäre Längsströme das Auswerteergebnis nicht verfälschen.

Überschreitet der Strom in der a-Ader nur für einen einzigen oder sehr wenige Abtastintervalle den maximalen Leitungsstrom in hohem Maße, z. B. um das 3- bis 5-fache, so veranlaßt die periphere Steuerung PST ebenfalls das Hochohmigschalten des Schaltelements pO. In diesem Fall ist eine Korrektur des Einflusses von Längsströmen nicht erforderlich, da hier der Leitungsstrom sehr viel größer als der mögliche Längsstrom ist und deshalb ein Kurzschluß angenommen werden darf. Das Hochohmigschalten der Speisewiderstände R1 und R2 hat unverzüglich nach Auftreten eines Kurzschlusses zu erfolgen, um die entstehende Verlustleistung zu minimieren. Die Kurzschlußdauer sollte wesentlich kürzer als eine Periode des Längsstromes sein.

Da in vielen Fällen Kurzschlüsse nur kurzzeitig bestehen, wird nach dem Hochohmigschalten des Schaltelementes pO der Leitungsstrom von der peripheren Steuerung PST weiter überwacht. Da nun der Leitungsstrom über die Widerstände R3 und R4 fließt, ergibt sich für den A/D-Wandler eine größere Empfindlichkeit, d. h. zum Durchlaufen eines Quantisierungsintervalls des A/D-Wandlers genügt hierbei eine kleinere Änderung von IA als im niederohmigen Speisezustand. Die Empfindlichkeit der Strommessung im hochohmigen Speisezustand ist durch das Verhältnis der Widerstände R3 und R4 festgelegt, wobei die Summe von R3 und R4 so gewählt wird, daß ein andauernder Kurzschluß an der a-Ader mit der Erde zu keiner Beschädigung der Speiseschaltung führt.

Ist der Kurzschluß beendet, wird der normale Speisezustand wie im nachfolgenden beschrieben wiederhergestellt : Durch die Endgerätestromversorgung EGSV ist sichergestellt, daß von den a-b-Adern erst dann wieder Strom entnommen wird, wenn die Batteriespannung UB bis auf einen gewissen Grenzwert für eine gewisse Zeit T1 wiederhergestellt ist. Die periphere Steuerung PST stellt nach Ende des Kurzschlusses fest, ob der Leitungsstrom einen unteren Grenzwert unterschritten hat. Zur unterdrückung des Einflusses von Längsspannungen wird hierbei, wie im Betriebsfall, ebenfalls über eine Längsspannungsperiode summiert. Innerhalb einer Zeit T2, die kleiner als die Zeit T1 ist, aktiviert die periphere Steuerung PST wiederum das Schaltelement pO.

Die Erfindung gemäß der Schaltungsanordnung ermöglicht im Falle eines Schlusses der a-Ader gegen Erde das Umschalten vom niederohmigen (pO geschlossen) in den hochohmigen (pO geöffnet) Speisezustand in relativ kurzer Zeit, beispielsweise 50 bis 100 ms. Vorgetäuschte Kurzschlüsse, die durch Kondensatoraufladung (C1) eines Endgerätes entstehen können, werden als solche erkannt und führen nicht zum hochohmig Schalten der Speisebrücke, da sonst die Betriebsbereitschaft des Endgeräts erst nach unverhältnismäßig langer Zeit wieder hergestellt wird.

Durch den Einsatz des A/D-Wandlers und der peripheren Steuerung PST bestehen in der Teilnehmerschaltung zusätzliche Testmöglichkeiten. Die Teilnehmerschaltung ist eigenprüfbar darüber hinaus kann die Anschlußleitung überprüft werden und festgestellt werden, ob Endgeräte an diese angeschlossen sind. Während beim Anschluß analoger Telefone an Digitalvermittlungen für diese Testfunktionen je Teilnehmerschaltung ein eigenes Testrelais aufweist, sind diese Testmöglichkeiten bei dem Anschluß von digitalen Einrichtungen an das ISDN (Integrated Services Digital-Network) ohne Testrelais realisierbar. Für den Digitalanschluß im Teilnehmerbereich sind bereits digital gesteuerte digitale Prüfschleifen vorgesehen, die für die Routineprüfung der Teilnehmerleitung verwendet werden. Auch kann bei einer geschlossenen Prüfschaltung über Bitfehlerratenmessung erkannt werden, ob Störungen im Übertragungsweg vorhanden sind. Die nachfolgend beschriebenen, mittels der erfindungsgemäßen Schaltungsanordnung durchführbaren Testfunktionen dienen einer groben Fehlereingrenzung für den Fall, daß die erwähnte Routineprüfschleife nicht funktionsfähig ist und gleichzeitig eine im Übertragungsfall der Teilnehmerschaltung vorhandene Prüfschleife fehlerfrei arbeitet.

Der Selbsttest der Speise- und Überwachungsschaltung wird bei deaktiviertem Endgerät durchgeführt und besteht mindestens aus je einer Messung des Leitungsstromes bei geöffnetem und geschlossenem Schaltelement pO. Bei Fehlerfreiheit der Schaltung stimmen bis auf etwaige Meßunsicherheiten beide Stromwerte überein. Durch diesen Test wird auch die Funktionsfähigkeit des Schaltelements pO erfaßt, da durch den Spannungsteiler R3 und R5 auch für den Fall $IA = O$ eine meßbare Spannungsänderung auftreten muß.

Der Leitungstest erfolgt ebenfalls durch eine Messung des Leitungsstroms. Dazu wird aufgrund eines Befehls von der zentralen Steuerung ZST an die periphere Steuerung PST eine Kette von Abtastwerten des A/D-Wandlers von der peripheren Steuerung PST an die zentrale Steuerung ZST übertragen. Je eine Kette von Abtastwerten des Leitungsstroms wird in hochohmigen und in niederohmigen Speisezustand erfaßt. Die Auswertung dieser einzelnen Abtastwerte erfolgt zentral, wobei der Mittelwert als Maß für den Gleitstrom und die Differenz zwischen Maxiamal- und Minimalwert als Maß für den Längstrom dient. Weicht der gemessene Gleichstrom um mehr als die Meßunsicherheit vom Ruhestrom ab, so kann dieser Meßwert auf einen groben Isolationsfehler, beispielsweise Feuchte im Kabel, hindeuten. Ströme in den a-b-Adern, die über dem Ruhestrom liegen, lassen auf eine Berührung mit Nachbaradern schließen.

Die Prüfung auf Anschluß eines Endgerätes erfolgt ebenfalls durch Messung des Leitungsstroms. Ist ein Endgerät angeschlossen, so entsteht am Eingang eines A/D-Wandlers nach Öffnen des Schaltelements pO ein charakteristischer Spannungsverlauf. Durch den Spannungsteiler R3, R5 wird eine Spannungsänderung an den a-b-Adern erzeugt, die mit der aus dem Kondensator C1 in Serie mit dem Leitungswiderstand, R3 und R4 gebildeten Zeitkonstante zu einer relativ langsamen Änderung der Spannung am A/D-Wandler führt. Bedingt durch den herrschenden Leitungsstrom erscheint unmittelbar nach Öffnen des Schaltelements pO ein kleiner Spannungssprung am A/D-Wandler. Ist aber die Leitung zur Endeinrichtung unterbrochen, tritt sofort nach dem Öffnen des Schaltelements pO eine definierte Spannungsänderung am Eingang des A/D-Wandlers auf, also ohne Verzögerung durch den Kondensator C1. Danach bleibt die Spannung am A/D-Wandler konstant. Dieser Verlauf deutet auf eine Unterbrechung der Teilnehmerleitung zwischen Endgerät und Teilnehmerschaltung. Für diesen Test werden sowohl unmittelbar vor als auch unmittelbar nach dem Öffnen des Schaltelements pO eine Folge von Meßwerten von der peripheren Steuerung PST zu der zentralsteuerung ZST für die Durchführung der schon beschriebenen Auswertung übertragen. Der Kondensator C1 hat zu einer wirkungsvollen Abblockung von Rückwirkungen der Endgerätestromversorgung EGSV einen Wert, der wesentlich größer als die Kapazität der Anschlußleitung, auch von sehr weit entfernten Teilnehmern ist. Dieses Testverfahren eignet sich daher für praktisch alle Teilnehmerleitungslängen.

Die Prüfung, ob ein Endgerät EG an die Leitung L und eine Speiseschaltung SPS angeschlossen ist, kann auch mit der in Fig. 2 dargestellten Schaltungsanordnung durchgeführt werden. Die dort dargestellte Konstantstromquelle 10 kann mittels Schließen des Schaltelements S1 und Schließen des Schaltelements pO aktiviert werden.

Die Leitung L ist durch je einen in jeder Leitungsader angeordneten Leitungswiderstand RL/2 sowie durch eine zwischen den Leitungsadern bestehende Leitungskapazität CL dargestellt ; das Endgerät EG wird durch den Widerstand REG sowie die Kapazität C1 repräsentiert.

Zur Prüfung, ob ein Endgerät EG an die Leitung L angeschlossen ist, kann anstelle des Einprägens einer durch den Spannungsteiler R3 und R5 im hochohmigen Zustand der Speisebrücke hervorgerufene Spannungsänderung auch ein Konstantstrom 10 am teilnehmerseitigen Ende des hochohmigen Widerstandes R4 eingeprägt werden. Durch einen Regelkreis zwischen dem Eingang des A/D-Wandlers und der Stromquelle kann diese so gesteuert werden, daß die Wirkung der Widerstände R3 und R4 aufgehoben wird und in der Parallelschaltung dieser gesteuerten Stromquelle zu den Widerstanden R3 und R4 die Wirkund einer Konstantstromquelle für die a-Ader entsteht. Auf diese Weise lassen sich gegenüber des anhand von Fig. 1 beschriebenen Verfahrens wesentlich kleinere Kapazitätswerte messen. Durch entsprechenden Abgleich der Stromquelle können sehr kleine Ströme in die Ader eingeprägt werden, die bei kleinen Kapazitäten zwischen der a- und b-Ader eine relativ langsame Spannungsänderung verursachen. Durch Messung der Änderungsgeschwindigkeit der Spannung zwischen den a-b-Adern kann auf die Gesamtkapazität der Anordnung rückgeschlossen werden, insbesondere also darauf, ob ein Endgerät mit der Kapazität C1 an die Leitung angeschlossen ist.

Die erfindungsgemäße Schaltungsanordnung wurde in ihrer erdasymmetrischen Ausführung dargestellt ; sie ist jedoch auch erdsymmetrisch ausführbar. In diesem Fall ist ein weiteres Schaltelement zum Hochohmigschalten der Speisung in der b-Ader vorgesehen. Über einen weiteren Spannungsteiler können Meßsignale von der b-Ader zum A/D-Umsetzer geführt werden. Auf diese Weise bietet die Schaltungsanordnung für beide Adern gleichwertige Prüfmöglichkeiten.

**Patentansprüche**

1. Schaltungsanordnung mit selbsttätiger Teilnehmeranschlußleitungsüberwachung mittels einer anschaltbaren Leitungsstromkontroll- und Meßschaltung für an Fernsprechanlagen mit zumindest einer zentralen Steuerung (ZST) anschaltbare digitale Endgeräte, wobei den Teilnehmerschaltungen dieser Endgeräte Indikationsstellen für die Überwachung von an Teilnehmeranschlußleitungen auftretenden Störeinflüssen zugeordnet sind, dadurch gekennzeichnet, daß mehreren über eine gemeinsame Baugruppe an eine Fernsprechanlage anschaltbaren Teilnehmerschaltungen jeweils den Indikationsstellen zugeordnete Leitungsstromkontrollschaltungen (LSKS1) und eine gemeinsame, baugruppenindividuelle Leitungsstromkontrollschaltung (LSKS2) zugeordnet sind, deren an den Indikationsstellen wirksame Potentiale einem Analog-Digitalwandler (A/D) zugeführt werden, der von einer der Baugruppe zugeordneten peripheren Steuerung (PST) gesteuert wird, und daß sowohl die periphere Steuerung (PST) zyklisch die der Baugruppen zugeordneten Teilnehmerschaltungen auf Störeinflüsse prüft, als auch durch die zentrale Steuerung (ZST) der Fernsprechanlage in Abhängigkeit von zur Messung bestimmter Funktionen an der Teilnehmeranschlußleitung abgegebenen Befehlen über die periphere Steuerung (PST) die Indikationsstellen der Teilnehmerschaltungen der Baugruppe ansteuerbar sind.

2. Schaltungsanordnung nach Anspruch 1, dadurch gekennzeichnet, daß der Analog-/Digital-Wandler (A/D) aufgrund bestimmte Störeinflüsse bewertender Ergebnisse eine die Störeinflüsse eingrenzende Schaltmaßnahme in der Teilnehmerschaltung steuert.

3. Schaltungsanordnung nach Anspruch 1, dadurch gekennzeichnet, daß die die Messung bestimmter Funktionen an der Teilnehmerleitung auslösenden Befehle in externe, an die zentrale Steuerung (ZST) anschaltbare Prüfendgeräte eingebbar sind.

4. Schaltungsanordnung nach Anspruch 1, dadurch gekennzeichnet, daß für die erforderliche Gleichstromspeisung in jede der beiden Adern (a und b) ein jeweils mit einem anderen Pol der einseitig geerdeten Speisespannungsquelle (— UB) verbundener Widerstand (R2, R1) und zusätzlich zumindest in eine Ader (z. B. a-Ader) ein durch ein paralleles Schaltelement (pO) überbrückbarer Spannungsteiler (R3 und R4) eingefügt ist, daß der Teilerpunkt dieser Widerstände (R3 und R4) mit einer Serienschaltung zweier weiterer Widerstände (R5 und R6) verbunden ist, deren Teilerpunkt mit einem Eingang eines mit Multiplexeingängen versehenen A/D-Wandlers (A/D) verbunden wird, der seinerseits mit einer peripheren, das Schaltelement (pO) schaltbaren Steuerung (PST) und einer zentralen Steuerung (ZST) in Verbindung steht, und daß der Fußpunkt (A) des zweiten weiteren Widerstandes (R6) sowohl mit dem Ausgang eines Operationsverstärkers verbunden ist, an dessen positivem Eingang die Bezugsspannung (UADO) des A/D-Wandlers (A/D) liegt, an dessen negativem Eingang über einen Widerstand (R7) die Speisespannung (UB) liegt, als auch mit einem, ebenfalls am negativen Eingang des Operationsverstärkers liegenden Widerstand (R8) verbunden ist, wobei sich die am negativen Eingang des Operationsverstärkers liegenden Widerstände (R7 und R8) so verhalten, wie sich die Summe aus dem ersten weiteren Widerstand (R5) und der Parallelschaltung der Widerstände (R3, R4) des Spannungsteilers zum Widerstand (R6) verhält.

5. Schaltungsanordnung nach Anspruch 4, dadurch gekennzeichnet, daß der A/D-Wandler (A/D) in Verbindung mit der peripheren Steuerung (PST) und der zentralen Steuerung (ZST) im Normalbetrieb das Schließen des Schaltelements (pO) bewirkt und den Leitungsstrom in äquidistanten Zeitintervallen mit einer Periodendauer digitalisiert, die ein ganzzahliger Bruchteil einer Periode mindestens eines störenden Längsstroms, hervorgerufen beispielsweise durch das Starkstromnetz oder das Bahnnetz, ist, wobei die periphere Steuerung (PST) über eine Periode von z. B. 60 ms aufsummiert und die Summe mit einem vorgegebenen Maximalwert vergleicht und bei Überschreiten des Maximalwertes das Öffnen des Schaltelements (pO) bewirkt.

6. Schaltungsanordnung nach Anspruch 4, dadurch gekennzeichnet, daß die periphere Steuerung (PST) bei Unterschreiten eines vorgegebenen unteren Grenzwertes des Leitungsstroms das Schließen des Schaltelements (pO) bewirkt.

7. Schaltungsanordnung nach Anspruch 4, dadurch gekennzeichnet, daß die periphere Steuerung (PST) zum Eigenprüfen der Teilnehmerschaltung die Messung des Leitungsstroms bei geöffnetem und geschlossenem Schaltelement (pO) bewirkt und gleiche Meßwerte als Fehlerfreiheit der Teilnehmerschaltung bewertet.

8. Schaltungsanordnung nach Anspruch 4, dadurch gekennzeichnet, daß die periphere Steuerung (PST) zur Prüfung auf Isolationsfehler der Adern die Abtastung des Leitungsstroms bei geöffnetem und

**0 121 926**

geschlossenem Schaltelement (pO) bewirkt, wobei der Mittelwert der Meßwerte als Maß und der Gleichstrom und die Differenz zwischen Maximal- und Minimalwert als Maß für den Längsstrom dient.

9. Schaltungsanordnung nach Anspruch 4, dadurch gekennzeichnet, daß zur Prüfung auf Anschluß eines Endgerätes (EG) die periphere Steuerung (PST) ein Öffnen des vorher geschlossenen Schaltelements (pO) bewirkt und die am Eingang des A/D-Wandlers (A/D) auftretende Spannungsänderung die Messung der Kapazität (C1) des Endgeräts (EG) erlaubt.

10. Schaltungsanordnung nach Anspruch 9, dadurch gekennzeichnet, daß zur Prüfung auf Anschluß eines Endgeräts (EG) ein Konstantstrom (IO) in mindestens eine der beiden Adern eingeprägt wird.

**Claims**

1. A circuit arrangement with automatic subscriber connection line monitoring by means of a line current checking and measuring circuit for digital terminal devices which can be connected to telephone systems with at least one central control unit (ZST), where the subscriber circuits of these terminal devices are assigned indication stations for monitoring disturbance influences which occur on subscriber connection lines, characterised in that each one of a plurality of subscriber circuits that can be connected to a telephone system via a common assembly is assigned a line current checking circuit (LSKS1) for the indication stations, and a common, assembly-individual line current checking circuit (LSKS2) whose potentials, which are active at the indication stations, are supplied to an analogue-to-digital converter (A/D) controlled by a peripheral control unit (PST) assigned to the assembly, and the peripheral control unit (PST) cyclically tests the subscriber circuits assigned to the assemblies for disturbance influences, whilst the indication stations of the subscriber circuits of the assembly can be driven via the peripheral control unit (PST) by the central control unit (ZST) of the telephone system in dependence upon commands emitted for the measurement of specific functions on the subscriber connection line.

2. A circuit arrangement as claimed in Claim 1, characterised in that on the basis of results evaluating specific disturbance influences, the analogue-to-digital converter (A/D) controls a switching measure in the subscriber circuit which restricts the disturbance influences.

3. A circuit arrangement as claimed in Claim 1, characterised in that the commands which trigger the measurement of the specific functions on the subscriber line can be input into external test terminal devices that can be connected to the central control unit (ZST).

4. A circuit arrangement as claimed in Claim 1, characterised in that for the necessary d. c. supply, a resistor (R2, R1) is inserted into each of the two wires (a and b) in each case connected to a different pole of the supply voltage source (— UB), which is earthed on one side, and in addition a potential divider (R3 and R4), which can be bridged by a parallel switching element (pO), is inserted into at least one wire (e. g. the a-wire), that the tapping point of the resistors (R3 and R4) is connected to a series arrangement composed of two further resistors (R5 and R6) whose tapping point is connected to an input of an A/D-converter (A/D) provided with multiplex inputs and itself connected to a peripheral control unit (PST), which can be switched by the switching element (pO), and to a central control unit (ZST), and that the base (A) of the second, further resistor (R6) is connected both to the output of an operational amplifier whose positive input is connected to the reference voltage (UADO) of the A/D-converter (A/D), whose negative input is connected via a resistor (R7) to the supply voltage (UB), and is also connected to a resistor (R8) which is likewise connected to the negative input of the operational amplifier, where the relationship between the resistors (R7 and R8), which are connected to the negative input of the operational amplifier, is identical to the relationship between the sum of the first further resistor (R5) and the parallel arrangement of the resistors (R3 and R4) of the potential divider and the resistor (R6).

5. A circuit arrangement as claimed in Claim 4, characterised in that the A/D-converter (A/D), in association with the peripheral control unit (PST) and the central control unit (ZST), serves in normal operation to close the switching element (pO) and digitalises the line current at equidistant time intervals, with a period duration which is a whole-numbered fraction of a period of at least one disturbing longitudinal current, caused for example by the power line or by the line network, where the peripheral control unit (PST) carries out addition over a period of e. g. 60 ms and compares the sum with a predetermined maximum value, and opens the switching element (pO) when the maximum value is exceeded.

6. A circuit arrangement as claimed in Claim 4, characterised in that the peripheral control unit (PST) closes the switching element (pO) when a predetermined lower limit value of the line current is undershot.

7. A circuit arrangement as claimed in Claim 4, characterised in that the peripheral control unit (PST) measures the line current when the switching element (pO) is open and closed for the self-testing of the subscriber circuit and evaluates identical measured values as indicating that the subscriber circuit is free of faults.

8. A circuit arrangement as claimed in Claim 4, characterised in that the peripheral control unit (PST) samples the line current when the switching element (pO) is open and closed for testing for insulation faults of the wires, where the mean of the measured values serves as a gauge of the d. c. current and the difference between the maximum and minimum value serves as a gauge of the longitudinal current.

9. A circuit arrangement as claimed in Claim 4, characterised in that in order to test whether a

6

terminal device (EG) is connected the peripheral control unit (PST) opens the previously closed switching element (pO) and the voltage change which takes place at the input of the A/D-converter (A/D) permits the measurement of the capacitance (C1) of the terminal device (EG).

10. A circuit arrangement as claimed in Claim 9, characterised in that in order to test whether a terminal device (EG) is connected, a constant current (IO) is impressed onto at least one of the two wires.

**Revendications**

1. Montage, dans lequel un contrôle automatique des lignes d'abonnés est réalisé à l'aide d'un circuit, pouvant être branché, de contrôle et de mesure du courant de ligne pour des installations téléphoniques comportant des postes terminaux numériques pouvant être raccordés au moins à un dispositif central de commande (ZST), et dans lequel des postes indicateurs servant à réaliser le contrôle d'influences parasites qui apparaissent dans des lignes d'abonnés, sont associés aux circuits d'abonnés de ces appareils terminaux, caractérisé par le fait qu'à plusieurs circuits d'abonnés, qui doivent être raccordés par l'intermédiaire d'un module commun à une installation téléphonique, se trouvent associés des circuits (LSKS1) de contrôle du courant de ligne, associés respectivement aux postes indicateurs, et un circuit commun (LSKS2) de commande du courant de ligne, prévu pour chaque module, les potentiels de ces circuits, qui sont actifs dans les postes indicateurs, étant envoyés à un convertisseur analogique/numérique (A/D), qui est commandé par un dispositif périphérique de commande (PST) associé au module, et qu'aussi bien le dispositif périphérique de commande (PST) contrôle cycliquement la présence éventuelle d'influences parasites dans les circuits d'abonnés associés aux modules, et les postes indicateurs des circuits d'abonnés du module peuvent être commandés par le dispositif central de commande (ZTST) de l'installation téléphonique, en fonction d'instructions délivrées pour l'exécution de la mesure de fonctions déterminées dans la ligne d'abonné.

2. Montage suivant la revendication 1, caractérisé par le fait que sur la base de résultats indiquant des influences parasites déterminées, le convertisseur analogique/numérique (A/D) commande un système de commutation, qui est situé dans le circuit d'abonné et limite les influences parasites.

3. Montage suivante la revendication 1, caractérisé par le fait que les instructions déclenchant la mesure de fonctions déterminées dans la ligne d'abonné, peuvent être introduites dans des appareils terminaux de contrôle externes, pouvant être raccordés au dispositif central de commande (ZST).

4. Montage suivant la revendication 1, caractérisé par le fait que pour l'alimentation nécessaire en courant continu, il est prévu dans chacun des deux conducteurs (a et b), une résistance (R2, R1) reliée respectivement à un autre pôle de la source de tension d'alimentation (— UB), dont une borne est mise à la masse, et en outre, au moins dans un conducteur (par exemple le conducteur a), un diviseur de tension (R3 et R4) pouvant être shunté par un élément de commutation (pO) parallèle, que le point de division de ces résistances (R3 et R4) est relié à un circuit série formé de deux autres résistances (R5 et R6), dont le point de division est relié à une entrée d'un convertisseur analogique/numérique (A/D) comportant des entrées de multiplexage et qui est relié, pour sa part, à un dispositif périphérique de commande (PST), branchant l'élément de commutation (pO), et à un dispositif central de commande (ZST), et que le pied (A) de la seconde résistance supplémentaire (R6) est relié aussi bien à la sortie d'un amplificateur opérationnel, à l'entrée positive duquel est appliquée la tension de référence (UADO) du convertisseur analogique/numérique (A/D) et à l'entrée négative duquel est appliquée, par l'intermédiaire d'une résistance (R7), la tension d'alimentation (UB), qu'à une résistance (R8) raccordée également à l'entrée négative de l'amplificateur opérationnel, les résistances (R7 et R8), qui sont raccordées à l'entrée négative de l'amplificateur opérationnel, se comportant de la même manière que la somme formée par la première résistance supplémentaire (R5) et le circuit formé par les résistances (R3, R4) du diviseur de tension, branchées en parallèle avec la résistance (R6).

5. Montage suivant la revendication 4, caractérisé par le fait que le convertisseur analogique/numérique (A/D) réalise pendant le fonctionnement normal, en liaison avec le dispositif périphérique de commande (PST) et le dispositif de commande central (ZST), la fermeture de l'élément de commutation (pO) et numérise le courant de ligne à des intervalles de temps équidistants avec une période d'une durée qui est égale à une fraction entière d'une période d'au moins un courant longitudinal parasite produit par exemple par le réseau à courant fort ou le réseau ferroviaire, auquel cas le dispositif périphérique de commande (PST) réalise une sommation pendant une période de par exemple 60 ms et compare la somme obtenue à une valeur maximale prédéterminée et réalise l'ouverture de l'élément de commutation (pO) lors du dépassement de la valeur maximale.

6. Montage suivant la revendication 4, caractérisé par le fait que le dispositif périphérique de commande (PST) réalise la fermeture de l'élément de commutation (pO) lorsque le courant de ligne tombe au-dessous d'une valeur limite inférieure prédéterminée.

7. Montage suivant la revendication 4, caractérisé par le fait que le dispositif périphérique de commande (PST) réalise, pour le contrôle proprement dit du circuit d'abonné, la mesure du courant de ligne lorsque l'élément de commutation (pO) est ouvert et lorsqu'il est fermé, et évalue les valeurs de mesure identiques en tant qu'absence de défaut dans le circuit d'abonné.

8. Montage suivant la revendication 4, caractérisé par le fait que le dispositif de commande (PST) réalise, pour le contrôle de défauts d'isolation des conducteurs, l'exploration du courant de ligne lorsque l'élément de commutation (pO) est ouvert et lorsqu'il est fermé, auquel cas la moyenne des valeurs de mesure sert de mesure du courant continu et la différence entre la valeur maximale et la valeur minimale sert de mesure pour le courant longitudinal.

9. Montage suivant la revendication 4, caractérisé par le fait que pour le contrôle du raccordement d'un appareil terminal (EG), le dispositif périphérique de commande (PST) réalise une ouverture de l'élément de commutation (pO) préalablement fermé et que la variation de tension, qui apparaît à l'entrée du convertisseur analogique/numérique (A/D) permet la mesure de la capacité (C) de l'appareil terminal (EG).

10. Montage suivant la revendication 9, caractérisé par le fait que, pour le contrôle du raccordement d'un appareil terminal (EG), un courant constant (IO) est injecté dans au moins l'un des deux conducteurs.

FIG 1

FIG 2